# EUROPEAN PATENT SPECIFICATION

(11) **EP 4 331 912 B1**
(45) Date of publication and mention of the grant of the patent: **26.03.2025**
(21) Application number: 23193798.8
(22) Date of filing: 29.08.2023
(51) Int. Cl.: B60P 3/07, B60R 3/00

(54) **FALL-PROOF SYSTEM AND MOTOR-VEHICLE TRANSPORTER EQUIPPED WITH SUCH FALL-PROOF SYSTEM**
ABSTURZSICHERUNGSSYSTEM UND KRAFTFAHRZEUGTRANSPORTER MIT SOLCH EINEM ABSTURZSICHERUNGSSYSTEM
SYSTÈME ANTICHUTE ET TRANSPORTEUR DE VÉHICULE AUTOMOBILE ÉQUIPÉ D'UN TEL SYSTÈME ANTICHUTE

(30) Priority: 02.09.2022 IT 202200018066
(43) Date of publication of application: 06.03.2024
(73) Proprietor: Rolfo S.p.A., 12042 Bra (CN) (IT)
(72) Inventor: Arnulfo, Elio, 12042 Bra (IT); Rolfo, Giorgio, 12042 Bra (IT)
(74) Representative: Garavelli, Paolo

(56) References cited:
- EP-A1- 3 118 058
- WO-A1-2022/010405
- FR-A1- 2 962 953
- US-A1- 2018 215 421

## Description

The present invention relates to a fall-proof system and to a vehicle for the transport of motor vehicles equipped with this fall-proof system.

In particular, the present invention relates to a system intended to prevent people operating on the elevated loading platforms of motor vehicles intended for the transport of motor vehicles (car transporters) from falling, which can be applied to tractors, trailers and semi-trailers.

Vehicles (car transporters) for the transport of motor vehicles, such as cars or vans, are commonly equipped with one or more loading decks. Generally, these vehicles include a lower loading floor and an upper loading floor, usually arranged at a height above the road surface of more than 2 m. It is therefore essential to ensure safety by preventing falls, especially from the upper loading platform, of the operators assigned to loading and unloading the vehicles from the car transporters.

Fall-proof systems for workers working on the upper loading surfaces of car transporters are known, and create a lateral barrier similar to a parapet, and are generally made with vertical posts fixed to the lateral ends of the upper loading surfaces, connected by several taut cables horizontally between the posts themselves.

With the increase in the width of the cars and light commercial vehicles (LCV) that must be transported, it becomes essential to have the maximum width available on the loading surface for the passage of vehicles and for opening the doors; solutions are known which allow the widening of the fall-proof protections in order to increase the lateral width of the loading platforms during the loading and unloading operations of the motor vehicles: these solutions substantially include the adoption of railings composed of poles or posts that can be removed from their bases or rotating around a vertical axis on its base to move to a position of minimum lateral encumbrance.

These known systems have the problem of being impractical to use: in fact, before loading or unloading the motor vehicles, all posts must be removed or turned to increase the width of the loading surface, to then be returned to their original protective position, thus significantly increasing the overall duration of the vehicle handling activities from the car transporters.

Furthermore, while these solutions allow for an increase in the lateral space, they create an empty space at the loading surface, considerably reducing the fall protection for the operators during the loading and unloading operations of the motor vehicles.

The document WO2022/010405 A1 discloses an example of a fall-preventing system suitable for a vehicle for transporting motor vehicles.

Object of the present invention is solving the aforesaid problems by providing a fall-proof system and a vehicle for the transport of motor vehicles equipped with this fall-proof system which are easy to use and simple to make.

The above and other objects and advantages of the invention, as will appear from the following description, are achieved with a fall-proof system and a vehicle for the transport of motor vehicles equipped with such fall-proof system such as those described in the independent claims. Preferred embodiments and non-trivial variants of the present invention form the subject of the dependent claims.

It is understood that all attached claims form an integral part of the present description.

It will be immediately obvious that innumerable variations and modifications may be made to what is described (for example relating to shape, dimensions, arrangements and parts with equivalent functionality) without departing from the scope of the invention as appears from the attached claims.

The present invention will be better described by a preferred embodiment thereof, provided by way of non-limiting example, with reference to the attached drawings, in which:

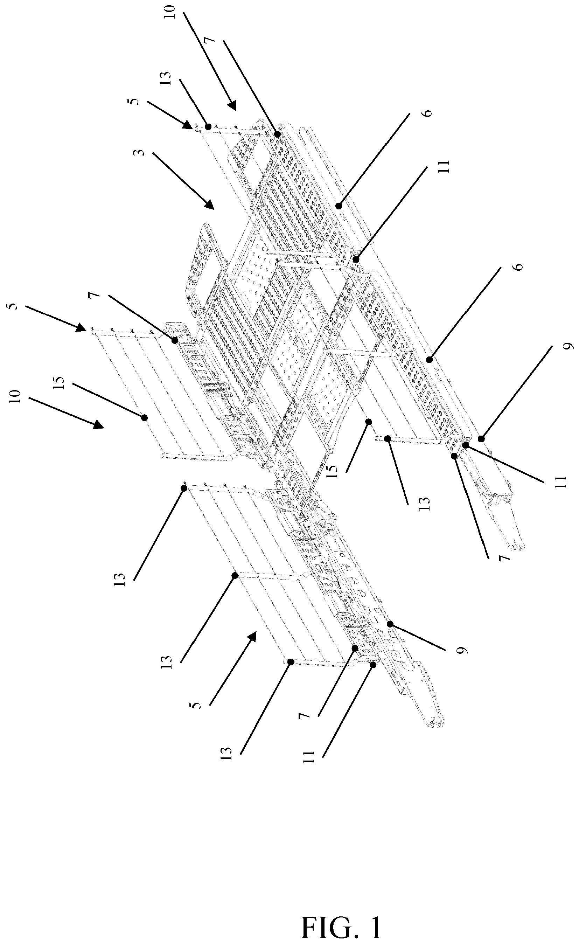

- Figure 1 is a perspective view of a loading platform including a fall-proof system according to the present invention;

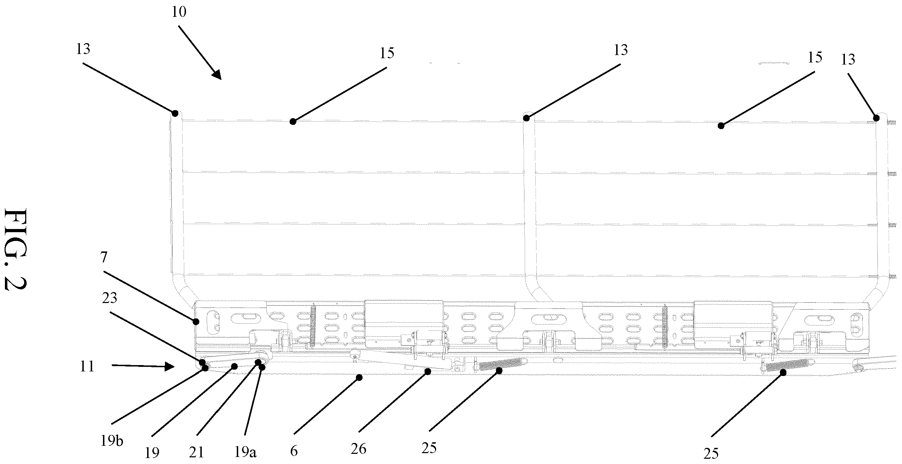

- Figure 2 is a front view of a fall-proof system according to the present invention in a first operating position;

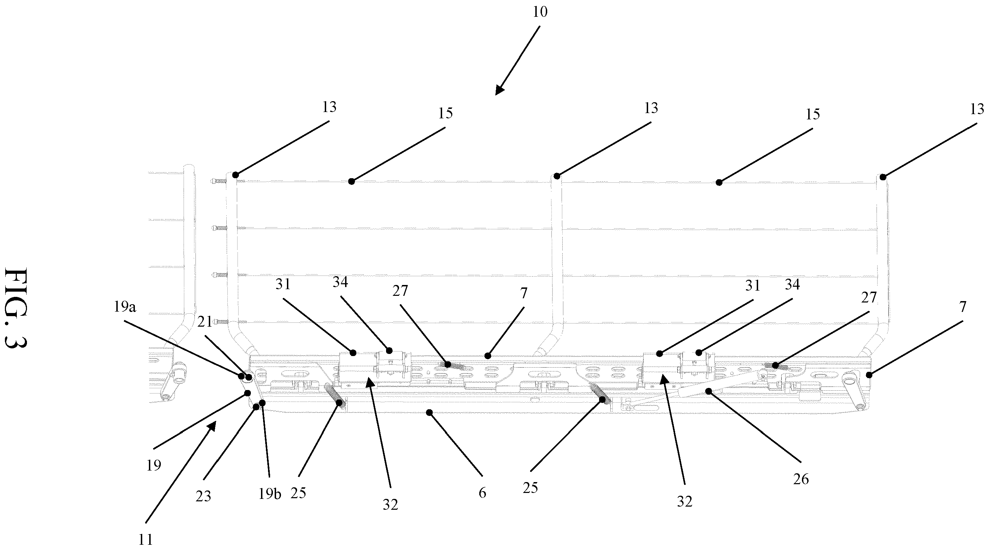

- Figure 3 is a front view of a fall-proof system according to the present invention in a second operating position;

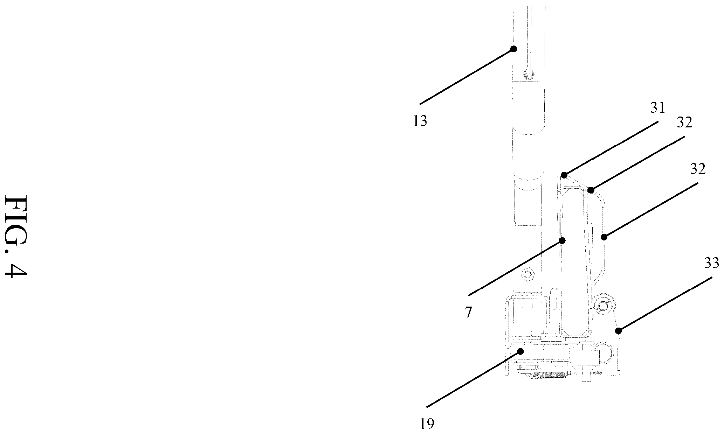

- Figure 4 is a side view of a detail of a fall-proof system according to the present invention in a first operating position;

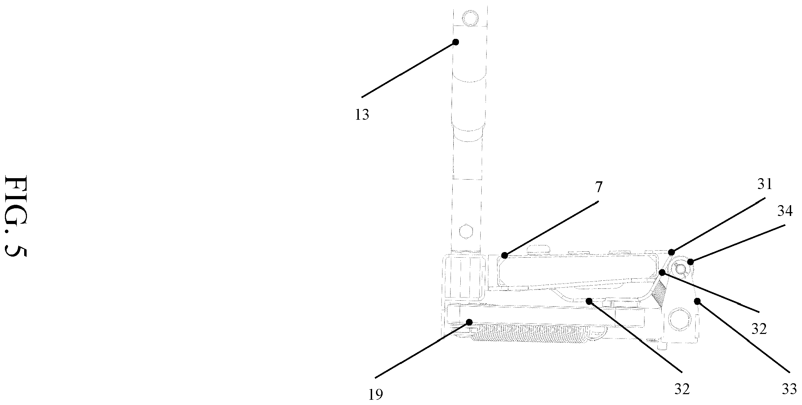

- Figure 5 is a side view of a detail of a fall-proof system according to the present invention in a second operating position.

Referring to the Figures, a preferred embodiment of the fall-proof system and a motor vehicle equipped with such fall-proof system of the present invention is shown and described.

The fall-proof system 10 for a vehicle for the transport of motor vehicles according to the present invention, in particular for a loading surface (bed) 3 of a vehicle for the transport of motor vehicles, comprises: at least one parapet structure 5 connected to at least one longitudinal support 6, this longitudinal support 6 being connected in an articulated way to an edge 9 of this loading surface 3 by interposing at least one articulated spacing mechanism 11, and a treading platform 7 connected in a rotating manner, for example by means of a hinge, to a longitudinal support 6, this longitudinal support 6 being connected in an articulated way to an edge 9 of this loading surface 3 to rotate around an axis parallel to the longitudinal support 6, connected to the edge 9 of the loading surface 3; advantageously, the treading platform 7 covers the empty space that is created when the parapet structure 5 moves away from the platform 7 and acts as a walkway allowing for safe walking.

The articulated spacing kinematic mechanism 11 is configured to allow the movement of the longitudinal support 6, and of the parapet structure 5 connected to it, with respect to the loading surface 3 between a first operating position in which the parapet structure 5 is substantially adherent to this loading surface 3, so as to give the loading surface 3 a running width compliant with road traffic regulations, and a second operating position in which the parapet structure 5 is spaced from the loading surface 3 to facilitate loading and unloading operations of the vehicles from this loading platform 3, the opening of the doors and the passage of the operators between the parapet structure 5 and the vehicles present on the platform 3 itself when the vehicle is stationary.

In the first operating position, the platform 7 is substantially perpendicular to the loading surface 3 while in the second operating position the platform 7 is aligned to the loading surface 3.

The platform 7 comprises at least one section 31 comprising inclined surfaces 32 which are in contact with an abutment element 33 fixed to the loading surface 3, configured to bring the platform 7 from the second operating position to the substantially vertical first operating position, thereafter the movement of the longitudinal support 6 of the parapet structure 5 from the second operating position spaced from the loading surface to the first operating position substantially adhering to the loading surface 3; to reduce friction, the abutment element 33 can be equipped with a roller 34.

As shown in the figures, the loading platform 3 is provided on each of its opposite side edges with a fall-proof system 10 according to the present invention.

Preferably, each parapet structure 5 is composed of at least two vertical uprights or posts 13 connected to the longitudinal support 6 between which horizontal retaining cables 15 or a single cable suitably sent in several sections of a type known in the art are suspended. The number of posts 13 and the length and number of cables 15 vary according to the length of the loading surface 3 to be protected by the system 10 of the invention.

Advantageously, this articulated spacing mechanism 11 comprises at least one connecting rod 19 having a first end 19a connected in an articulated way, for example by interposing a rotation pin 21, to the edge 9 of the loading surface 3, and a second end 19b also connected in an articulated way, for example by interposing a rotation pin 23, to the longitudinal support 6 of the parapet structure 5.

In addition, each fall-proof system 10 according to the present invention can comprise at least one locking device of a known type, configured to lock the parapet structure 5 at least in the first operating position: by acting on the locking device it is possible to unlock the system 10 allowing movement to the second operating position. It is possible to provide that the same locking device, or a further locking device, provides for locking the parapet structure 5 also in the second operating position.

In a known way, the number of distinct articulated kinematic mechanisms 11 which connect the longitudinal support 6 of the parapet structure 5 to the related edge 9 of the loading platform 3 is variable and substantially depends on the length of the loading platform 3 to be protected by the system 10 according to the present invention.

For example, in a preferred embodiment of the fall-proof system 10 of the invention, each parapet structure 5 is connected to the related edge 9 by interposing two articulated kinematic systems 11, each of which is preferably arranged at a post 13 and suitably equidistant.

In addition, each fall-proof system 10 according to the present invention can comprise at least one actuator device 26, for example a hydraulic cylinder, connected to the longitudinal support 6 of the parapet structure 5 to bring it from the first operating position to the second operating position of the system 10; preferably, the blocking device is a return spring 25 which prevents the opening of the parapet structure 5 in the event of a failure of the actuator 26, keeping the fall-proof system 10 in the first operating position, with a regulatory width for traffic on the road.

In operation, the rotational movement of the treading platform 7, to bring it from the first operating position substantially perpendicular to the loading surface 3 to the second horizontal operating position, is obtained by the force of gravity and preferably with the help of an elastic element 27, for example a spring, connected to the platform 7. The opposite movement, to bring the platform 7 from the second operating position to the first substantially vertical operating position, is obtained by the reciprocal action of the inclined surfaces 32 which come into contact with the abutment element 33, fixed to the loading surface 3, when the longitudinal support 6 of the parapet structure 5 is brought from the second position spaced from the loading surface to the first position substantially adhering to the loading surface 3. When the platform 7 has arrived in a substantially vertical position, its rotational movement is prevented on one side by the abutment element 33, preferably through the roller 34, and on the other by a limit switch of the rotation hinge of the platform 7, with the possible interposition of a rubber buffer with an antivibration function.

Advantageously, the vehicle for the transport of motor vehicles and the fall-proof system of the present invention allow obtaining a reliable and simple-to-implement system, which allows to widen the lateral space of the loading surfaces of the vehicle for the transport of motor vehicles without decreasing the level of protection offered.

Some preferred embodiments of the present invention have been shown and described above: obviously, numerous variants and modifications, functionally equivalent to the previous ones, which fall within the scope of the invention as defined by the appended claims, will be immediately apparent to those skilled in the art.

## Claims

1. Fall-proof system (10) for a motor-vehicle transporter comprising:
at least one parapet structure (5) connected to at least one longitudinal support (6), an articulated spacing kinematic mechanism (11), said at least one longitudinal support (6) being able to be connected in an articulated way to an edge (9) of a loading surface (3) of the vehicle by means of said articulated spacing kinematic mechanism (11), and a platform (7) connected in a rotating way to a longitudinal support (6) able to be connected in an articulated way to the edge (9) of said loading surface (3) to rotate around an axis parallel to the longitudinal support (6) and to the edge (9) so as to cover the empty space created when the parapet structure (5) moves away from the loading surface (3), said articulated spacing mechanism (11) being configured to allow a movement of the parapet structure (5) with respect to the loading surface (3) between a first operating position in which the parapet structure (5) is substantially adherent to said loading surface (3) and a second operating position in which the parapet structure (5) is spaced from the loading surface (3) to facilitate the loading and unloading operations of the vehicles from said loading surface (3),
**characterized in that** the platform (7) comprises at least one section (31) comprising inclined surfaces (32) which are in contact with an abutment element (33) able to be fixed to the loading surface (3), said inclined surfaces (32) being configured to bring the platform (7) from the second operating position, aligned to the loading surface (3), to the first operating position substantially perpendicular to the loading surface (3), following the displacement of the longitudinal support (6) of the structure parapet (5) from the second operating position spaced from the loading surface (3) to the first operating position substantially adhering to the loading surface (3).

2. Fall-proof system (10) for a motor-vehicle transporter according to claim 1, **characterized in that** said articulated spacing mechanism (11) comprises at least one connecting rod (19) having a first end (19a) able to be
connected in an articulated way tc the edge (9) of the loading surface (3), and a second end (19b) also connected in an articulated way to the longitudinal support (6) of the parapet structure (5).

3. Fall-proof system (10) for a motor-vehicle transporter according to any one of the preceding claims, **characterized in that** the abutment element (33) comprises at least one roller (34) to reduce friction with the inclined surfaces (32).

4. Fall-proof system (10) for a motor-vehicle transporter according to any one of the preceding claims, **characterized in that** it comprises an elastic element (27) connected to the platform (7) to facilitate its movement from the first operating position substantially perpendicular to the loading surface (3) to the second horizontal operating position.

5. Fall-proof system (10) for a motor-vehicle transporter according to any one of the preceding claims, **characterized in that** each parapet structure (5) is composed of at least two vertical posts or posts (13) connected to the longitudinal support (6) between which horizontal retaining cables (15) or a single cable suitably sent in several sections are subtended.

6. Fall-proof system (10) for a motor-vehicle transporter according to any one of the preceding claims, **characterized in that** each parapet structure (5) is able to be connected to the related edge (9) by interposing two articulated spacing kinematic mechanisms (11).

7. Fall-proof system (10) for a motor-vehicle transporter according to any one of the preceding claims, **characterized in that** it comprises at least one actuator device (26) connected to the longitudinal support (6) of the parapet structure (5) to bring it from the first operating position to the second operating position.

8. Fall-proof system (10) for a motor-vehicle transporter according to any one of the preceding claims, **characterized in that** a rotational movement of the platform (7) is prevented on one hand by the abutment element (33) and on another end by a limit switch of a rotation hinge of the platform (7).

9. Transporter for the transport of motor vehicles comprising a fall-proof system (10) according to any one of the preceding claims mounted at the side edges of the loading surface (3).

## Patentansprüche

1. Absturzsicherungssystem (10) für ein Kraftfahrzeug umfassend:
mindestens eine Brüstungsstruktur (5), die mit mindestens einem Längsträger (6) verbunden ist, eine gelenkige Distanzkinematik (11), wobei der mindestens eine Längsträger (6) mittels der gelenkigen Distanzkinematik (11) gelenkig mit einer Kante (9) eines Ladebodens (3) des Fahrzeugs verbindbar ist, und eine Plattform (7), die drehbar mit einem Längsträger (6) verbunden ist, der gelenkig mit der Kante (9) des Ladebodens (3) verbindbar ist Ladefläche (3) um eine Achse parallel zum Längsträger (6) und zum Rand (9) zu drehen, um den leeren Raum abzudecken, der entsteht, wenn sich die Brüstungsstruktur (5) von der Ladefläche (3) wegbewegt, wobei die gelenkige Distanzierungskinematik (11) so konfiguriert ist, dass sie die Bewegung der Brüstungsstruktur (5) in Bezug auf die Ladefläche (3) zwischen einer ersten Betriebsposition, in der die Brüstungsstruktur (5) im Wesentlichen an der Ladefläche (3) haftet, und a zweite Betriebsposition, in der die Brüstungsstruktur (5) von der Ladefläche (3) beabstandet ist, um die Be- und Entladevorgänge der Fahrzeuge von der Ladefläche (3) zu erleichtern,
**dadurch gekennzeichnet, dass** die Plattform (7) mindestens einen Abschnitt (31) umfasst, der geneigte Ebenen (32) umfasst, die in Kontakt mit einem Gegenelement (33) stehen, das an der Ladeebene (3) befestigt werden kann, wobei die geneigten Ebenen (32) dazu ausgelegt sind, die Plattform (7) von der zweiten Betriebsposition, die mit der Ladeebene (3) ausgerichtet ist, in die erste Betriebsposition zu bringen, die im Wesentlichen senkrecht zur Ladeebene (3) ist, und zwar der Bewegung des Längsträgers (6) der zu folgen Brüstung (5) aus der von der Ladefläche (3) beabstandeten zweiten Betriebsposition in die erste Betriebsposition im Wesentlichen an der Ladefläche (3) anliegt.

2. Absturzsicherungssystem (10) für ein Fahrzeug zum Transport von Kraftfahrzeugen nach Anspruch 1, **dadurch gekennzeichnet, dass** die gelenkige Abstandskinematik (11) mindestens eine Verbindungsstange (19) umfasst, deren erstes Ende (19a) gelenkig mit dem Rand (9) der Ladefläche (3) verbindbar ist, und deren zweites Ende (19b) ebenfalls gelenkig mit dem Längsträger (6) der Struktur verbunden ist Brüstung (5).

3. Absturzsicherungssystem (10) für ein Fahrzeug zum Transport von Kraftfahrzeugen nach einem der vorhergehenden Ansprüche, **dadurch gekennzeichnet, dass** das Anschlagelement (33) mindestens eine Rolle (34) zur Reduzierung der Reibung mit den schiefen Ebenen (32) aufweist.

4. Absturzsicherungssystem (10) für ein Fahrzeug zum Transport von Kraftfahrzeugen nach einem der vorhergehenden Ansprüche, **dadurch gekennzeichnet, dass** es ein elastisches Element (27) umfasst, das mit der Plattform (7) verbunden ist, um deren Bewegung von der ersten Betriebsposition im Wesentlichen senkrecht zur Ladefläche (3) in die zweite horizontale Betriebsposition zu erleichtern.

5. Absturzsicherungssystem (10) für ein Fahrzeug zum Transport von Kraftfahrzeugen nach einem der vorhergehenden Ansprüche, **dadurch gekennzeichnet, dass** jede Brüstungsstruktur (5) aus mindestens zwei mit dem Längsträger (6) verbundenen vertikalen Pfosten oder Pfosten (13) besteht, zwischen denen horizontale Halteseile (15) oder ein einzelnes, entsprechend in mehreren Abschnitten verlegtes Seil geführt sind.

6. Absturzsicherungssystem (10) für ein Fahrzeug zum Transport von Kraftfahrzeugen nach einem der vorhergehenden Ansprüche, **dadurch gekennzeichnet, dass** jede Brüstungsstruktur (5) durch die Zwischenschaltung zweier gelenkiger Abstandskinematikmechanismen (11) mit der entsprechenden Kante (9) verbunden werden kann.

7. Absturzsicherungssystem (10) für ein Kraftfahrzeugtransportfahrzeug nach einem der vorhergehenden Ansprüche, **dadurch gekennzeichnet, dass** es mindestens eine Betätigungsvorrichtung (26) umfasst, die mit dem Längsträger (6) der Brüstungsstruktur (5) verbunden ist, um diese von der ersten Betriebsposition in die zweite Betriebsposition zu bringen.

8. Absturzsicherungssystem (10) für ein Fahrzeug zum Transport von Kraftfahrzeugen nach einem der vorhergehenden Ansprüche, **dadurch gekennzeichnet, dass** die Drehbewegung der Plattform (7) einerseits durch das Anschlagelement (33) und andererseits durch einen Endschalter eines Drehgelenks der Plattform (7) verhindert wird.

9. Fahrzeug für den Transport von Kraftfahrzeugen mit einem Absturzsicherungssystem (10) nach einem der vorhergehenden Ansprüche, das an den Seitenkanten der Ladefläche (3) angebracht ist.

## Revendications

1. Système antichute (10) pour véhicule automobile comprenant:
au moins une structure de parapet (5) reliée à au moins un support longitudinal (6), un mécanisme cinématique d'écartement articulé (11), ledit au moins un support longitudinal (6) pouvant être relié de manière articulée à un bord (9) d'un plancher de chargement (3) du véhicule au moyen dudit mécanisme cinématique d'écartement articulé (11), et une plateforme (7) reliée de manière rotative à un support longitudinal (6) susceptible d'être reliée de manière articulée au bord (9) de ladite surface de chargement (3) pour tourner autour d'un axe parallèle au support longitudinal (6) et au bord (9) de manière à couvrir l'espace vide créé lorsque la structure de parapet (5) s'éloigne de la surface de chargement (3), ladite cinématique d'éloignement articulée (11) étant configurée pour permettre le mouvement de la structure de parapet (5) par rapport à la surface de chargement (3) entre une première position de fonctionnement dans laquelle la structure de parapet (5) est sensiblement adhérente à ladite surface de chargement (3) et une deuxième position de fonctionnement dans laquelle la structure de parapet (5) est espacée de la surface de chargement (3) pour faciliter les opérations de chargement et de déchargement des véhicules depuis ladite surface de chargement (3),
**caractérisé en ce que** la plateforme (7) comprend au moins un tronçon (31) comprenant des plans inclinés (32) qui sont en contact avec un contre-élément (33) susceptible d'être fixé au plan de chargement (3), lesdits plans inclinés (32) étant configurés pour amener la plateforme (7) de la deuxième position de fonctionnement, alignée avec le plan de chargement (3), à la première position de fonctionnement sensiblement perpendiculaire au plan de chargement (3), suite au mouvement du support longitudinal (6) de la structure de parapet (5) depuis la deuxième position de fonctionnement espacée de la surface de chargement (3) jusqu'à la première position de fonctionnement adhérant sensiblement à la surface de chargement (3).

2. Système antichute (10) pour véhicule de transport de véhicules automobiles selon la revendication 1, **caractérisé par le fait que** ladite cinématique d'écartement articulé (11) comprend au moins une bielle (19) présentant une première extrémité (19a) susceptible d'être reliée de manière articulée au bord (9) de la surface de chargement (3), et une deuxième extrémité (19b) également reliée de manière articulée au support longitudinal (6) de la structure du parapet (5).

3. Système antichute (10) pour véhicule de transport de véhicules automobiles selon l'une quelconque des revendications précédentes, **caractérisé en ce que** l'élément de butée (33) comprend au moins un galet (34) pour réduire les frottements avec les plans inclinés (32).

4. Système antichute (10) pour véhicule de transport de véhicules automobiles selon l'une quelconque des revendications précédentes, **caractérisé en ce qu'**il comprend un élément élastique (27) relié à la plateforme (7) pour faciliter son déplacement depuis la première position de fonctionnement sensiblement perpendiculaire à la surface de chargement (3) jusqu'à la deuxième position de fonctionnement horizontale.

5. Système antichute (10) pour véhicule de transport de véhicules automobiles selon l'une quelconque des revendications précédentes, **caractérisé par le fait que** chaque structure de parapet (5) est composée d'au moins deux montants ou poteaux verticaux (13) reliés au support longitudinal (6) entre lesquels sont sous-tendus des câbles de retenue horizontaux (15) ou un câble unique acheminé de manière appropriée en plusieurs tronçons.

6. Système antichute (10) pour véhicule de transport de véhicules automobiles selon l'une quelconque des revendications précédentes, **caractérisé par le fait que** chaque structure de parapet (5) est susceptible d'être reliée au bord concerné (9) au moyen de l'interposition de deux mécanismes cinématiques d'espacement articulés (11).

7. Système antichute (10) pour véhicule de transport automobile selon l'une quelconque des revendications précédentes, **caractérisé en ce qu'**il comprend au moins un dispositif actionneur (26) relié au support longitudinal (6) de la structure de parapet (5) pour la faire passer de la première position de fonctionnement à la deuxième position de fonctionnement.

8. Système antichute (10) pour véhicule de transport de véhicules automobiles selon l'une quelconque des revendications précédentes, **caractérisé en ce que** le mouvement de rotation de la plateforme (7) est empêché d'un côté par l'élément de butée (33) et de l'autre par un fin de course d'une charnière de rotation de la plateforme (7).

9. Véhicule pour le transport de véhicules automobiles comprenant un système antichute (10) selon l'une quelconque des revendications précédentes monté en correspondance avec les bords latéraux de la surface de chargement (3).
